# EUROPÄISCHE PATENTANMELDUNG

(11) **EP 0 924 872 A2**
(43) Veröffentlichungstag der Anmeldung: **23.06.1999**
(21) Anmeldenummer: 98440270.1
(22) Anmeldetag: 20.11.1998
(51) Int. Cl.: H04B 1/713

(54) **Verfahren zur Erzeugung einer Funkfrequenzsprungfolge für eine Funkkommunikation, Funkvorrichtung und Funkkommunikationssystem dafür**

(30) Priorität: 16.12.1997 DE 19755831
(71) Anmelder: ALCATEL, 75008 Paris (FR)
(72) Erfinder: Noll Borreto, André, 01099 Dresden (DE); Deissner, Jürgen, 01159 Dresden (DE)
(74) Vertreter: Brose, Gerhard, Dipl.-Ing.

(57) **Zusammenfassung**

Aus dem sogenannten GSM (Global System for Mobile Communucations) ist bekannt, die Frequenzsprungfolgen mittels eines Algorithmus zu erzeugen, der auf eine Nachschlagetabelle (sogenannte RNTABLE) zugreift, um eine pseudo-zufällige Verwürfelung von Zwischenergebnissen zu erzeugen.

Der Erfindung liegt die Erkenntnis zugrunde, die an sich bekannte Nachschlagetabelle nicht nur zur Verwürfelung von Zwischenergebnissen zu verwenden, sondern darüber hinaus auch zur eindeutigen Zuordnung von Funkvorrichtungen untereinander, insbesondere zur Zuordnung von Mobilstationen zu einer Funkfeststation. Es wird nun vorgeschlagen, mehrere verschiedene Nachschlagetabellen (RNTBLi) zu verwenden, die eindeutig den Funkvorrichtungen zugeordnet werden, wobei die miteinander in Funkkommunikation stehenden Funkvorrichtungen dieselbe Nachschlagetabelle erhalten. Vorzugsweise werden die verschiedenen Nachschlagetabellen in Abhängigkeit von Teilnehmeridentifikationen erzeugt, wodurch jedem Teilnehme eine Nachschlagetabelle eindeutig zugeordnet ist. Die Erfindung eignet sich besonders zum Aufbau von privaten Funkkommunikationssystemen.

## Beschreibung

Die Erfindung betrifft ein Verfahren zum Erzeugen einer Frequenzsprungfolge gemäß dem Oberbegriff des Patentanspruchs 1 sowie eine Funkvorrichtung, die entsprechend der Frequenzsprungfolge mit einer anderen Funkvorrichtung kommuniziert, und einem damit ausgestatteten Funkkommunikationssystem nach einem der Oberbegriffe der nebengeordneten Ansprüche.

Es sind Funkkommunikationssysteme bekannt, bei dem auf mehreren benutzbaren Trägerfrequenzen eine Funkübertragung zwischen Funkvorrichtungen erfolgt, wobei die Funkvorrichtungen zwischen den zugewiesenen Trägerfrequenzen wechseln. Diese Art der Funkübertragung ist als sogenanntes "Frequenzsprungverfahren" bekannt und wird auch "frequency hopping" genannt. Ein bekanntes Funkkommunikationssystem, bei dem das Frequenzsprungverfahren ("frequency hopping") angewendet wird, ist das sogenannte GSM (Global System for Mobile Communications).

Aus dem Buch "The GSM: System for Mobile Communications" von M. Mouly, erschienen 1992 im Eigenverlag, Palaiseau, Frankreich, wird der Aufbau und die Funktionsweise des GSM näher beschrieben. In dem Kapitel 4.2.2.2, auf Seiten 218 bis 224 wird ein Verfahren zum Erzeugen einer Frequenzsprungfolge, der sogenannten "hopping sequence", genau beschrieben: Es werden Angaben über die zuzuweisenden Trägerfrequenzen, nämlich der sogenannte MAI (Mobile Allocation Index) ermittelt. Dazu werden zunächst Eingangsdaten, wie etwa der sogenannte MAIO (Mobile Allication Index Offset) und die sogenannte HSN (Hopping Sequence Number), vorgegeben.

Aus dem ETSI-Standard, GSM Recommendation 05.02 Version 5.1.0 ist ein Verfahren zum Erzeugen einer Frequenzsprungfolge bekannt, bei dem Angaben über zuzuweisende Trägerfrequenzen ermittelt werden, nämlich der genannte MAI (Mobile Allocation Index), der die zuzuweisende Trägerfrequenz innerhalb einer Trägereinheit (sog. "carrier unit") angibt. Wie dort in GSM 05.02 im Abschnitt 6.2.3 und mit Hilfe der Figur 6 beschrieben wird, hat das bekannte Verfahren folgende Schritte: Zunächst werden Eingangsdaten vorgegeben, die zumindest eine Anzahl von benutzbaren Trägerfrequenzen und ein zu verwendendes Frequenzsprungschema angeben, nämlich die Angabe N bzw. die Angabe HSN. Dabei ist N die Anzahl der nutzbaren Trägerfrequenzen, die zwischen 1 und 64 variiert, und HSN ist die genannte "hopping sequence number", die angibt welches von 64 möglichen Frequenzsprungschemen verwendet wird. Wie in Figur 6 zu sehen ist, werden weiterhin folgende Eingangsdaten vorgegeben: die Angabe MA (Mobile Allocation), die Angabe FN (Frame Number) mit den Parametern T1 bis T3. Aus diesen Eingangsdaten wird mittels des im GSM 05.02 auf Seite 17 und in Figur 6 dargestellten Algorithmus die Frequenzsprungfolge erzeugt, indem für jeden Zeitabschnitt die Angabe MAI (Mobile Allocation Index) berechnet wird. Dazu werden die oben genannten Eingangsdaten miteinander verknüpft, wobei auf eine Nachschlagetabelle zugegriffen wird. Diese Nachschlagetabelle (sog. "look-up table" RNTABLE) ist fest vorgegeben (siehe GSM 05.02, Seite 17). Diese Nachschlagetabelle enthält eine pseudo-zufällige Zuordnung von 114 Eingangswerten (Adressen von 000 bis 113) zu 128 Ausgangswerten (Inhalte von 0 bis 127). Die pseudo-zufällige Zuordnung bewirkt eine Verwürfelung von Zwischenergebnissen, die der Algorithmus erzeugt (siehe in Figur 6 "look-up table").

Der Erfindung liegt nun die Erkenntnis zugrunde, daß die an sich bekannte Nachschlagetabelle auch dazu dienen kann, diejenigen Funkvorrichtungen, die miteinander in Funkkommunikation stehen, zu kennzeichnen und damit gegenseitig zuzuordnen.

Erfindungsgemäß werden daher mehrere verschiedene Nachschlagetabelle erzeugt, wobei denjenigen Funkvorrichtungen, die miteinander in Funkkommunikation stehen, dieselbe Nachschlagetabelle zugeordnet wird. Das bedeutet, daß das bekannte Verfahren zum Erzeugen der Frequenzsprungfolge dahingehend verbessert wird, daß nun auf mehrere verschiedene Nachschlagetabellen zugegriffen wird, um zwischen den miteinander kommunizierenden Funkvorrichtungen eine eindeutige Zuordnung herzustellen.

Das hat den Vorteil, daß die Zuordnung der Funkvorrichtungen nicht nur anhand von üblichen Kennungen, wie beispielsweise der sogenannten IMSI (International Mobile Subscriber Idendity) oder der Gerätekennung IMEI (International Mobile Equipment Identity) erfolgt, sondern durch ein weiteres Kriterium verbessert wird, nämlich durch die verschiedenen Nachschlagetabellen.

Mit Hilfe der erfindungsgemäßen Maßnahmen können die eindeutigen Zuordnungen zwischen den Funkvorrichtungen nicht nur verbessert werden, sondern es kann auch ein Funkkommunikationssystem gebildet werden, das sich von dem bekannten GSM Mobilkommunikationssystem darin unterscheidet, daß jetzt mehrere verschiedene Nachschlagetabellen verwendet werden. Das neu gebildete Funkkommunikationssystem ist daher besonders geeignet für die private Funkkommunikation mit Hilfe von an sich bekannter GSM-Hardware, wobei jetzt eine neue Software (modifizierter Algorithmus) zur Erzeugung der Frequenzsprungfolge eingesetzt wird.

Das erfindungsgemäße Funkkommunikationssystem enthält daher Mittel zur Berechnung der Frequenzsprungfolge, die auf mehrere verschiedene Nachschlagetabellen zugreifen, und Funkvorrichtungen, mit Speichermitteln in denen diese Nachschlagetabellen so gespeichert sind, daß die miteinander in Funkkommunikation stehenden Funkvorrichtungen dieselbe Nachschlagetabelle gespeichert haben. Außerdem wird eine erfindungsgemäße Funkvorrichtung für das Funkkommunikationssystem vorgeschlagen, die ein entsprechendes Mittel zur Berechnung der Frequenzsprungfolge und ein entsprechendes Speichermittel enthält.

Vorteilhafte Ausgestaltungen der Erfindung sind den Unteransprüchen zu entnehmen:

Besonders Vorteilhaft ist es, wenn die verschiedenen Nachschlagetabelle Matrizen sind, deren Eingangsvektoren jeweils einem Ausgangsvektor zugeordnet werden, wobei die Ausgangsvektoren der verschiedenen Matrizen zueinander orthogonal sind. Dadurch wird erreicht, daß die im Frequenzsprungverfahren arbeitendenden Funkvorrichtungen sich gegenseitig möglichst wenig stören.

Werden die Funkvorrichtungen durch mindestens eine Funkfeststation und durch mindestens zwei Mobilstationen repräsentiert, so ist es besonders vorteilhaft, wenn jede der Mobilstationen eine Nachschlagetabelle enthält, deren pseudo-zufällige Zuordnung abhängig ist von einer Teilnehmerkennung. Diese Teilnehmerkennung identifiziert den Teilnehmer, der die Mobilstation benutzt. Das bedeutet, daß jedem Teilnehmer innerhalb des Funkkommunikationssystems eine eigene Nachschlagetabelle zugeordnet ist.

Besonders vorteilhaft ist es auch, wenn jeder Mobilstation eine Nachschlagetabelle zugeordnet wird, deren pseudo-zufällige Zuordnung abhängig von der Gerätekennung der Mobilstation ist. Damit wird jeder Funkvorrichtung eine Nachschlagetabelle eindeutig zugeordnet.

Außerdem ist es besonders vorteilhaft, wenn die Funkfeststation alle Nachschlagetabellen der Mobilstationen gespeichert hat, so daß alle Mobilstationen mit dieser Funkfeststation kommunizieren können. In diesem Zusammenhang ist es auch denkbar, daß mehrere Funkfeststationen verwendet werden, von denen einzelne nur einen beschränkten Satz von Nachschlagetabellen enthalten. Damit kann eine Zuteilung der Mobilstationen zu einer Untermenge der Funkfeststationen, also eine Gruppenzuordnung, durchgeführt werden.

Ein weiterer besonderer Vorteil ergibt sich, wenn in dem Speichermittel der Mobilstation nicht nur die Nachschlagetabelle für die Funkkommunikation mit der Funkfeststation gespeichert ist, sondern wenn auch eine weitere Nachschlagetabelle für eine Funkkommunikation mit einer anderen Funkfeststation eines zweiten Mobilkommunikationssystems gespeichert ist. Dadurch wird eine Funkvorrichtung vorgeschlagen, die sowohl mit dem ersten Mobilkommunikationssystem (beispielsweise mit einem privaten Funkkommunikationssystem) als auch mit einem zweiten Mobilkommunikationssystem (beispielsweise mit einem öffentlichen Funkkommunikationssystem, wie dem GSM) kommunizieren kann. Die Hardware der Funkvorrichtung entspricht dabei im Wesentlichen derjenigen einer herkömmlichen Funkvorrichtung für das zweite Mobilkommunikationssystem.

Die Erfindung wird nun näher beschrieben anhand eines Ausführungsbeispieles und unter Zuhilfenahme folgender Zeichnungen:
- Figur 1,: die schematisch das Ablaufdiagramm für ein erfindungsgemäßes Verfahren zeigt; und
- Figur 2,: die schematisch den Aufbau eines privaten Mobilkommunikationssystems zeigt, das sich in der Umgebung eines öffentlichen Mobilkommunikationssystems befindet.

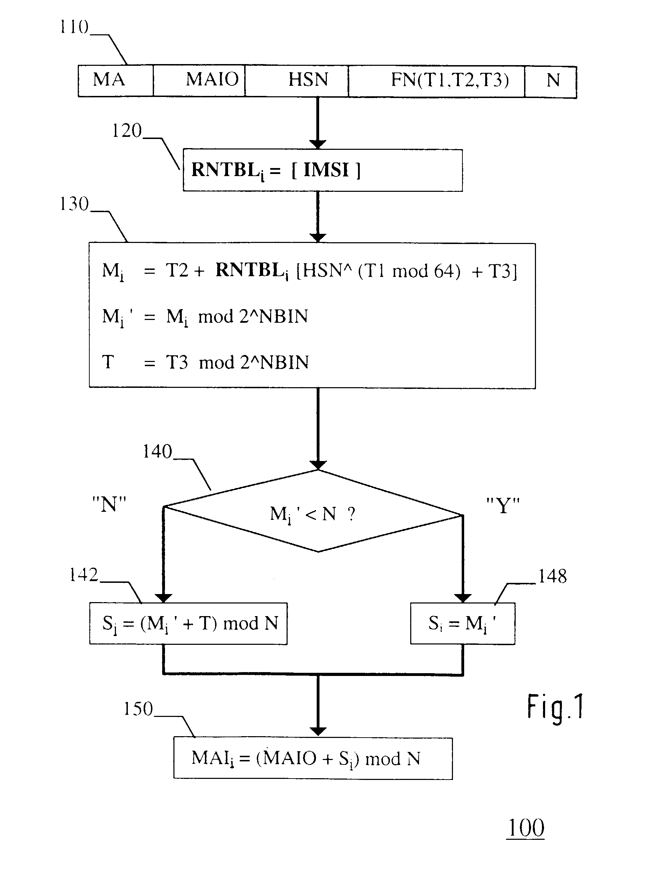

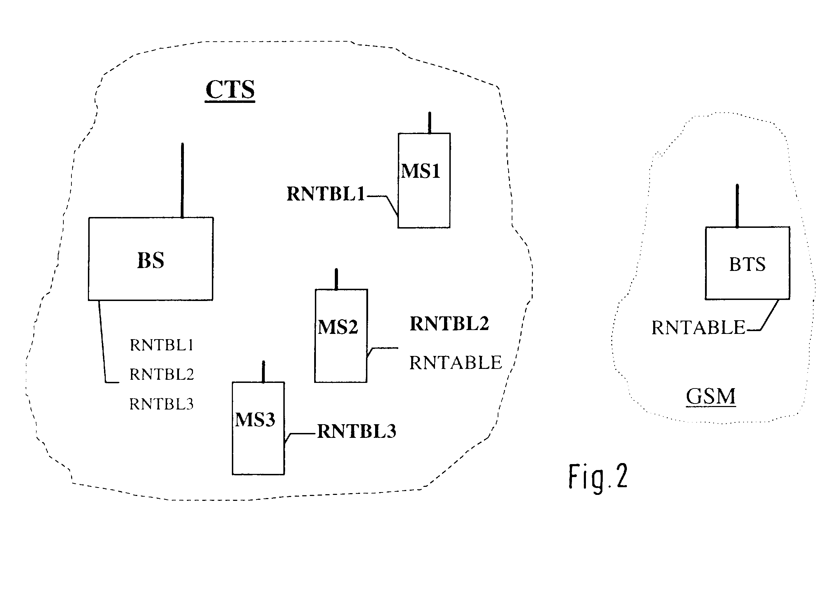

Die Figur 1 zeigt schematisch das Ablaufdiagramm eines erfindungsgemäßen Verfahrens 100 mit den Schritten 110 bis 150. Das Verfahren dient der Erzeugung einer Frequenzsprungfolge für eine Funkkommunikation zwischen Funkvorrichtungen, die zeitabschnittweise zwischen den zugewiesenen Trägerfrequenzen wechseln. Ein Beispiel für das Funkkommunikationssystem wird noch später anhand der Figur 2 näher beschrieben.

Das in Figur 1 dargestellte Verfahren 100 beginnt zunächst mit einem ersten Schritt 110, in dem folgende Eingangsdaten vorgegeben werden: ein erstes Eingangsdatum MA (Mobile Allocation), das angibt, welche benutzbaren Trägerfrequenzen innerhalb einer Funkzelle verwendet werden dürfen, ein zweites Eingangsdatum MAIO (Mobile Allocation Index Offset) das angibt mit welchem Frequenzversatz die Frequenzsprungfolge durchlaufen werden soll, ein drittes Eingangsdatum HSN (Hopping Sequence Number), die angibt welches von insgesamt 64 möglichen Frequenzsprungfolgeschemen verwendet werden soll, ein viertes Eingangsdatum FN (Frame Number), das die Rahmennummer angibt und ein fünftes Eingangsdatum N, das die Anzahl der im Gesamtsystem benutzbaren Frequenzen angibt. Das vierte Eingangsdatum FN wird genauer definiert durch drei Parameter, nämlich erstens durch T1, das die Nummer des zu verwendenden Rahmens innerhalb eines sogenannten Superrahmens angibt, zweitens durch T2, das die Rahmennummer innerhalb eines sogenannten Verkehrsrahmens angibt, und drittens durch T3, das die Rahmennummer innerhalb eines sogenannten Signalisierungsrahmens angibt.

In einem nächsten Schritt 120 wird nun auf eine von mehreren verschiedenen Nachschlagetabellen RNTBLi zugegriffen, nämlich in diesem Beispiel auf diejenige Nachschlagetabelle, die dem Benutzer der Mobilstation zugeordnet ist. Das bedeutet, daß die nun verwendete Nachschlagetabelle abhängig ist von der Teilnehmerkennung IMSI des Teilnehmers. Die Verwendung der Nachschlagetabelle dient dazu, die Zwischenergebnisse untereinander zu verwürfeln und anschließend einem weiteren Schritt 130 zuzuführen. Das bedeutet, daß das vorgeschlagene Verfahren 100 sich von dem bekannten Verfahren (s. GSM 05.02, Figur 6) sich darin unterscheidet, daß nun mehrere verschiedene Nachschlagetabellen zur Verfügung stehen, von denen eine ausgewählt wird, vorzugsweise in der Abhängigkeit der Teilnehmerkennung.

In dem weiteren Schritt 130 werden die verwürfelten Zwischenergebnis nun wie folgt mit anderen Daten verknüpft: Zunächst wird eine Anzahl Mi wie folgt berechnet: Mi = T2 + RNTBLi [HSN^{(T1 mod 64)} + T3]. Dann wird zu dieser Zahl Mi die Restbildung mittels der folgenden modulo-Operation durchgeführt und eine neue Zahl Mi' berechnet: Mi' = Mi mod 2^{NBIN}. Außerdem wird aus dem Parameter T3 noch ein später zu verwendender Parameter T berechnet anhand folgender Gleichung: T = T3 mod2^{NBIN}.

Die berechnete Anzahl Mi' wird in einem weiteren Schritt 140 mit der Anzahl N verglichen. Es wird dabei geprüft, ob Mi' kleiner als N ist. Das bedeutet, daß geprüft wird, ob die berechnete Anzahl Mi' kleiner als die Anzahl N von benutzbaren Tägerfrequenzen ist.

Ergibt die Prüfung, daß Mi' kleiner als N ist, so wird in einem Schritt 148 ein noch später verwendetes Zwischenergebnis Si gleich diesem Mi' gesetzt (Si=Mi'). Ist Mi' nicht kleiner als N, so wird in einem Schritt 142 das Zwischenergebnis Si wie folgt berechnet: Si = (Mi' + T) mod N.

Das berechnete Zwischenergebnis Si dient in einem nachfolgenden Schritt 150 schließlich zur Berechnung der gesuchten Angabe MAli, die sich ergibt aus: MAli = (MAIO + Si) mod N. Die im Schritt 150 berechnete Angabe MAI (Mobile Allocation Index) entspricht der zuzuweisenden Trägerfrequenz in dem aktuellen Zeitschlitz (z.B. carrier "3"). Aus dieser Angabe kann auch die absolute Frequenzangabe berechnet werden, d.h. die Zahl innerhalb des Frequenzbandes, die den zuzuweisenden Träger angibt (z.B. 935,4 MHz). Die absolute Frequenzangabe wird im GSM 05.02 mit RFCN (Radio Frequency Channel Number) bezeichnet.

Im Vergleich des beschriebenen Verfahrens 100 mit dem herkömmlichen Verfahren aus GSM 05.02 wird deutlich, daß ein Zugriff auf mehrere verschiedene Nachschlagetabellen erfolgt (Schritt 120), um zusätzlich zu der an sich bekannten Verwürfelung der Zwischenergebnisse auch noch eine Kennung der Mobilstation mit einzubringen. Das bedeutet, daß die von der Mobilstation verwendete Frequenzsprungfolge anhand einer ihr eindeutig zugeordneten Nachschlagetabelle erfolgt. Die Kennung dieser Nachschlagetabelle kann mittels der Auswertung der Teilnehmerkennung IMSI oder beispielsweise mittels Auswertung der Gerätekennung der Mobilstation erfolgen (sogenannte IMEI: International Mobile Equipment Identity). Das in Figur 1 beschriebene Verfahren wird durchgeführt in dem nun nach Figur 2 beschriebenen Funkkommunikationssystem:

Die Figur 2 zeigt schematisch den Aufbau eines erfindungsgemäßen Funkkommunikationssystems CTS, das sich in der Nachbarschaft zu einem herkömmlichen Funkkommunikationssystem GSM befindet. Das erfindungsgemäße Kommunikationssystem CTS ist ein Mobilfunksystem für die private Funkkommunikation und enthält eine Funkfeststation BS sowie mehrere Mobilstationen MS1 bis MS3.

Jeder der Mobilstationen ist nun eindeutig eine Nachschlagetabelle zugeordnet; in diesem Beispiel ist der MS1 die Nachschlagetabelle RNTBL1 zugeordnet, der MS2 die Nachschlagetabelle RNTBL2 und der MS3 die Nachschlagetabelle RNTBL3. Die Funkfeststation BS verfügt über alle drei verschiedenen Nachschlagetabellen RNTBLi mit i = {1,2,3}. Demnach kann eine Funkkommunikation im Vielfachzugriffsverfahren erfolgen, wobei die Mobilstationen wie auch die Funkfeststation gemäß dem Frequenzsprungverfahren ("frequency hopping") ihre Trägerfrequenzen zeitabschnittsweise wechseln. Durch die individuell zugeordneten verschiedenen Nachschlagetabellen wird sichergestellt, daß die Mobilstationen sich gegenseitig nicht stören und daß das vorgeschlagene Mobilfunksystem CTS nicht mit benachbarten Mobilfunksystemen interferieren. Benachbarte Mobilfunksysteme können ebenfalls erfindungsgemäße Systeme oder auch herkömmliche Systeme sein. Beispielsweise befindet sich das beschriebene erfindungsgemäße Funkkommunikationssystem CTS in einer Umgebung des öffentlichen Mobilfunksystems GSM, das in der Figur 2 symbolisch durch eine Funkfeststation BTS dargestellt ist. In diesem herkömmlichen Mobilfunksystem GSM wird nur eine einzige Nachschlagetabelle RNTABLE verwendet.

Es ist nun besonders vorteilhaft, wenn zumindest eine der vorgeschlagenen Mobilstationen MS2 zusätzlich zu der ihr zugeordneten Nachschlagetabelle RNTBL2 auch noch über die Nachschlagetabelle für das öffentliche Mobilfunksystem GSM verfügt. Dadurch wird sichergestellt, daß diese Mobilstation MS2 mit beiden Mobilfunksystemen kommunizieren kann. Es ist besonders vorteilhaft, wenn das vorgeschlagene Mobilfunksystem CTS im Wesentlichen auf derselben Hardware aufgebaut ist, wie das herkömmliche Mobilfunksystem GSM. Dadurch kann die genannte Mobilstation MS2 sehr einfach aufgebaut sein, indem lediglich verschiedene Software implementiert wird.

Das beschriebene Ausführungsbeispiel bezieht sich auf ein Mobilkommunikationssystem. Die Erfindung ist jedoch nicht auf solche Funkkommunikationssysteme beschränkt. Vielmehr ist es denkbar, die Erfindung auch in anderen Funkkommunikationssystemen, in denen nur mobile Funkvorrichtungen verwendet werden, einzusetzen (z.B. in einem taktischen Funkkommunikationsystem). Das beschriebene Mobilkommunikationssystem hatte lediglich eine Funkfeststation. Es ist auch denkbar mehrere Funkfeststationen zu verwenden, wobei vorzugsweise nicht alle Mobilstationen an allen Funkfeststationen einbuchbbar sind. Es können vielmehr verschiedene Gruppen von Mobilstationen gebildet werden, indem einzelne Funkfeststationen nur über eine Untermenge der zugeordneten Nachschlagetabellen verfügen. Neben der beschriebenen Mobilstation, die auch über eine Nachschlagetabelle für das öffentliche Mobilfunknetz verfügt, ist es auch denkbar eine Funkfeststation derart auszugestalten, daß diese sowohl in dem privaten als auch im öffentlichen Mobilfunknetz einsetzbar ist.

## Patentansprüche

1. Verfahren (100) zum Erzeugen einer Frequenzsprungfolge, die Angaben (MAI) über zuzuweisende Trägerfrequenzen enthält, für eine Funkkommunikation zwischen Funkvorrichtungen, die zeitabschnittweise zwischen den zugewiesenen Trägerfrequenzen wechseln, mit folgenden Schritten:
- Es werden Eingangsdaten (N; MAIO, HSN, T1 bis T3) vorgegeben, die zumindest eine Anzahl (N) von benutzbaren Trägerfrequenzen und ein zu verwendendes Frequenzsprungschema (HSN) angeben (Schritt 110);
- aus den Eingangsdaten wird mittels eines Algorithmus die Frequenzsprungfolge erzeugt, indem für jeden Zeitabschnitt die Angaben (MAI) über die zuzuweisende Trägerfrequenz berechnet werden durch Verknüpfung der Eingangsdaten miteinander und durch Zugriff auf eine Nachschlagetabelle, die eine pseudo-zufällige Zuordnung von Eingangswerten zu Ausgangswerten vorgibt, um von dem Algorithmus erzeugte Zwischenergebnisse pseudo-zufällig untereinander zu verwürfeln (Schritte 120 bis 150),
**dadurch gekennzeichnet**, daß
auf mehrere verschiedene Nachschlagetabellen (RNTBLi) zugegriffen wird, wobei denjenigen Funkvorrichtungen, die miteinander in Funkkommunikation stehen, dieselbe Nachschlagetabelle zugeordnet wird (Schritt 120).

2. Verfahren (100) nach Anspruch 1, dadurch gekennzeichnet, daß die verschiedenen Nachschlagetabellen (RNTBLi) Matrizen sind, deren Eingangsvektoren jeweils einem Ausgangsvektor zugeordnet werden, wobei die Ausgangsvektoren der verschiedenen Matrizen zueinander zumindest annähernd orthogonal sind.

3. Verfahren (100) nach Anspruch 1, dadurch gekennzeichnet, daß die Funkvorrichtungen mindestens eine Funkfeststation (BS) und zwei Mobilstationen (MS1 bis MS3) sind, und daß jeder der Mobilstationen (MS1) eine der Nachschlagetabellen (RNTBL1) zugeordnet wird, deren pseudo-zufällige Zuordnung abhängig von einer Teilnehmerkennung (IMSI) vorgegeben wird, die einen Teilnehmer identifiziert, der die Mobilstation (MS1) benutzt (Schritt 120).

4. Verfahren nach Anspruch 1, dadurch gekennzeichnet, daß die Funkvorrichtungen mindestens eine Funkfeststation und zwei Mobilstationen sind, und daß jeder der Mobilstationen eine der Nachschlagetabellen zugeordnet wird, deren pseudo-zufällige Zuordnung abhängig von der Gerätekennung der Mobilstation vorgegeben wird.

5. Verfahren (100) nach Anspruch 3 oder 4, dadurch gekennzeichnet, daß die Nachschlagetabellen (RNTBLi) in den Funkvorrichtungen (BS; MS1 bis MS3) gespeichert werden, wobei in der mindestens einen Funkfeststation (BS) alle Nachschlagetabellen der mindestens zwei Mobilstationen (MS1 bis MS3) gespeichert werden.

6. Verfahren (100) nach Anspruch 5, dadurch gekennzeichnet, daß aus der mindestens einen Funkfeststation (BS) und den Mobilstationen (MS1 bis MS3) ein erstes Mobilkommunikationssystem (CTS) gebildet wird, und daß in zumindest einer der Mobilstationen (MS2) sowohl die Nachschlagetabelle (RNTBL2) für eine Funkkommunikation mit der mindestens einen Funkfeststation (BS) gespeichert wird als auch eine andere Nachschlagetabelle (RNTABLE) für eine Funkkommunikation mit mindestens einer anderen Funkfeststation (BTS) eines zweiten Mobilkommunikationssystems (GSM) gespeichert wird.

7. Funkkomunikationssystem (CTS) mit Funkvorrichtungen (BS; MS1 bis MS3), die entsprechend einer Frequenzsprungfolge, die Angaben (MAI) über zuzuweisende Trägerfrequenzen enthält, zeitabschnittweise zwischen den Trägerfrequenzen wechseln, mit Mitteln zur Berechnung der Frequenzsprungfolge, die aus Eingangsdaten (N; MAIO, HSN, T1 bis T3), die zumindest eine Anzahl (N) von benutzbaren Trägerfrequenzen und ein zu verwendendes Frequenzsprungschema (HSN) angeben, mittels eines Algorithmus für jeden Zeitabschnitt die Angaben (MAI) über die zuzuweisende Trägerfrequenz berechnen durch Verknüpfung der Eingangsdaten miteinander und durch Zugriff auf eine Nachschlagetabelle, die eine pseudo-zufällige Zuordnung von Eingangswerten zu Ausgangswerten vorgibt, um von dem Algorithmus erzeugte Zwischenergebnisse pseudo-zufällig untereinander zu verwürfeln,
**dadurch gekennzeichnet**, daß
die Mittel zur Berechnung der Frequenzsprungfolge auf mehrere verschiedene Nachschlagetabellen (RNTBLi) zugreifen, und daß diejenigen Funkvorrichtungen (BS, MS1), die miteinander in Funkkommunikation stehen, Speichermittel haben, in denen dieselbe Nachschlagetabelle (RNTBL1) gespeichert ist.

8. Funkkomunikationssystem (CTS) nach Anspruch 7, dadurch gekennzeichnet, daß die Funkvorrichtungen mindestens eine Funkfeststation (BS) und zwei Mobilstationen (MS1 bis MS3) sind, und daß in jeder der Mobilstationen (MS1) eine der Nachschlagetabellen (RNTBL1) gespeichert ist, deren pseudo-zufällige Zuordnung abhängig von einer Teilnehmerkennung (IMSI) vorgegeben ist, die einen Teilnehmer identifiziert, der die Mobilstation (MS1) benutzt.

9. Funkvorrichtung (MS2) innerhalb eines Funkkommunikationssystems (CTS), bei dem diese und andere Funkvorrichtungen (BS; MS1, MS3) entsprechend einer Frequenzsprungfolge, die Angaben (MAI) über zuzuweisende Trägerfrequenzen enthält, zeitabschnittweise zwischen den Trägerfrequenzen wechseln und Mittel zur Berechnung der Frequenzsprungfolge enthalten, die aus Eingangsdaten (N; MAIO, HSN, T1 bis T3), die zumindest eine Anzahl (N) von benutzbaren Trägerfrequenzen und ein zu verwendendes Frequenzsprungschema (HSN) angeben, mittels eines Algorithmus für jeden Zeitabschnitt die Angaben (MAI) über die zuzuweisende Trägerfrequenz berechnen durch Verknüpfung der Eingangsdaten miteinander und durch Zugriff auf eine Nachschlagetabelle, die eine pseudo-zufällige Zuordnung von Eingangswerten zu Ausgangswerten vorgibt, um von dem Algorithmus erzeugte Zwischenergebnisse pseudo-zufällig untereinander zu verwürfeln,
**dadurch gekennzeichnet, daß**
die Mittel zur Berechnung der Frequenzsprungfolge auf mehrere verschiedene Nachschlagetabellen (RNTBLi) zugreifen, und daß die Funkvorrichtung (MS2), die mit einer der anderen Funkvorrichtungen (BS) in Funkkommunikation steht, ein Speichermittel hat, in dem dieselbe Nachschlagetabelle (RNTBL2) gespeichert ist, wie in der anderen Funkvorrichtung (BS).

10. Funkvorrichtung nach Anspruch 9, dadurch gekennzeichnet, daß die Funkvorrichtung eine Mobilstation (MS2) ist, die mit der anderen Funkvorrichtung, die eine Funkfeststation (BS) eines ersten Mobilkommunikationssystems (CTS) ist, in Funkkommunikation steht, und daß in dem Speichermittel der Mobilstation (MS2) sowohl die Nachschlagetabelle (RNTBL2) für die Funkkommunikation mit dieser Funkfeststation (BS) gespeichert ist als auch eine andere Nachschlagetabelle (RNTABLE) für eine Funkkommunikation mit einer anderen Funkfeststation (BTS) eines zweiten Mobilkommunikationssystems (GSM) gespeichert ist.
